(19) **Europäisches Patentamt European Patent Office Office européen des brevets**

(11) **EP 4 492 023 B1**

(12) **EUROPEAN PATENT SPECIFICATION**

(45) Date of publication and mention of the grant of the patent:
**21.01.2026 Bulletin 2026/04**

(21) Application number: **23184896.1**

(22) Date of filing: **12.07.2023**

(51) International Patent Classification (IPC):
**G01K 7/18** *(2006.01)*    **G01K 15/00** *(2006.01)*
**G01F 23/24** *(2006.01)*

(52) Cooperative Patent Classification (CPC):
**G01K 7/18; G01F 23/242; G01F 23/248; G01K 15/007**

(54) **A SYSTEM AND A METHOD FOR DETERMINING CONTACT WITH AN OBJECT OR A FLUID**

SYSTEM UND VERFAHREN ZUR BESTIMMUNG DES KONTAKTS MIT EINEM OBJEKT ODER EINER FLÜSSIGKEIT

SYSTÈME ET PROCÉDÉ DE DÉTERMINATION DE CONTACT AVEC UN OBJET OU UN FLUIDE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(43) Date of publication of application:
**15.01.2025 Bulletin 2025/03**

(73) Proprietors:
- **Imec VZW**
  **3001 Leuven (BE)**
- **Universiteit Hasselt**
  **3500 Hasselt (BE)**

(72) Inventors:
- **OUDEBROUCKX, Gilles**
  **3840 Borgloon (BE)**
- **THOELEN, Ronald**
  **3520 Hasselt (BE)**

(74) Representative: **AWA Sweden AB**
**Box 5117**
**200 71 Malmö (SE)**

(56) References cited:
**SE-C2- 516 026      US-A1- 2006 267 724**

- GUSTAFSSON S E: "TRANSIENT PLANE SOURCE TECHNIQUES FOR THERMAL CONDUCTIVITY AND THERMAL DIFFUSIVITY MEASUREMENTS OF SOLID MATERIALS", REVIEW OF SCIENTIFIC INSTRUMENTS, AMERICAN INSTITUTE OF PHYSICS, 2 HUNTINGTON QUADRANGLE, MELVILLE, NY 11747, vol. 62, no. 3, 1 March 1991 (1991-03-01), pages 797 - 804, XP000224328, ISSN: 0034-6748, DOI: 10.1063/1.1142087

**Description**

Technical field

The present description relates to determining contact with an object or a fluid.

Background

Contact temperature sensors are used in various applications for measuring temperature. Contact temperature sensors measure temperature by the sensor making contact with the object or fluid for which the temperature is to be measured. Contact temperature sensors may often be used when an accurate temperature measurement is needed.

However, even perfectly calibrated contact temperature sensors can return invalid data when thermal contact with the object under test is disturbed or lost. Today's standard temperature sensors do not possess ability to distinguish between good and bad thermal contact. Contact temperature sensors are often arranged in a fixture that can be attached to the object under test. After installation, it is simply assumed that the sensor makes good contact with the object under test. However, due to vibrations, contraction, and expansion of materials, presence of dirt, etc., the contact between the object and the sensor can be disturbed or lost. On this occurrence, it is very well possible that collected temperature readings remain realistic. However, if contact is disturbed or lost, the temperature readings no longer represent the actual temperature of the object under test. This can lead to the misinterpretation of data and associated consequences.

Summary

An objective of the present description is to provide a sensor that is suitable for determining contact with an object or a fluid. A particular objective is to enable determining thermal contact which may be used for improving accuracy of temperature measurements.

These and other objectives are at least partly met by the invention as defined in the independent claims. Preferred embodiments are set out in the dependent claims.

According to a first aspect, there is provided a system for determining contact with an object or a fluid, said system comprising: a sensor comprising an electrically conductive structure, wherein the sensor is configured to induce a current through the electrically conductive structure and sense a temperature-induced change in resistance of the electrically conductive structure for determining contact information, wherein the temperature-induced change in resistance is dependent on heat exchange with the electrically conductive structure and an environment; a processor unit configured to receive the sensed temperature-induced change in resistance, wherein the processor unit is configured to process the sensed temperature-induced change in resistance for determining contact information between the sensor and the object or the fluid.

It is an insight of the present description that a sensor configured to sense a temperature-induced change in resistance may be used for determining contact information. This provides a simple sensor for determining contact information.

The system may be particularly suitable for use in association with temperature measurements in order to provide reliability of temperature measurements. In particular, the system may be used for providing input whether a contact temperature sensor actually makes contact with an object or fluid and, hence, whether temperature measurements are reliable.

However, it should be realized that the system may be used in various applications and need not necessarily be used in association with temperature measurements. The system may be arranged on or in any structure, such as by at least the sensor of the system being mounted on a surface of the structure, in order to allow determining contact between the structure and an object or fluid.

The sensor of the system may be used for determining contact information between the sensor and the object or the fluid. The sensor may further be arranged on a physical housing or a surface such that, if desired, the contact information may further apply to information of contact between the entire physical housing (which may include a surface on which the sensor is mounted) and the object or fluid. The system for determining contact information may also be packaged into an entity carrying the sensor and the processor unit. Such system may in turn be mounted with a set relation to a structure allowing the contact information to also provide information of contact between the structure and the object or fluid.

The system enabling determining contact with an object or a fluid may imply that the system determines whether there is contact with the object or fluid or not. Alternatively or additionally, the system provides quantifying information of contact between the sensor and the object or fluid, that is how much of the sensor makes contact with the object or fluid. As yet another alternative, the system may, in case touching contact with the object or fluid does not occur, determine a (short) distance between the sensor and the object or fluid.

It is an insight of the present description that a sensor that is typically used for measuring thermal properties of a material may instead or additionally be used for determining contact information. A thermal property sensor using transient plane source (TPS) method may comprise a metal or other electrically conductive structure which is arranged in contact with the object under test. A current pulse is applied to the metal structure, while voltage over the metal structure is measured. Due to Joule heating, the temperature of the metal structure will increase and cause a temperature-induced change in electrical resistance, which may be recorded by the voltage measurement. The change in electrical resistance is dependent on the thermal properties of the material in contact with the metal structure such that the voltage measurements may be used for determining thermal properties, such as thermal effusivity. Such a thermal property sensor using transient plane source (TPS) method is known since the publication of the following scientific paper : GUSTAFSSON S E: "TRANSIENT PLANE SOURCE TECHNIQUES FOR THERMAL CONDUCTIVITY AND THERMAL DIFFUSIVITY MEASUREMENTS OF SOLID MATERIALS", REVIEW OF SCIENTIFIC INSTRUMENTS, AMERICAN INSTITUTE OF PHYSICS, 2 HUNTINGTON QUADRANGLE, MELVILLE, NY 11747, vol. 62, no. 3, 1 March 1991 (1991-03-01), pages 797-804.

It should be realized that the sensor may be configured to induce the current through the electrically conductive structure by the sensor providing a current signal so as to apply a current to the electrically conductive structure. Thus, the sensor may be configured to sense the temperature-induced change in resistance by sensing a voltage across the electrically conductive structure.

As an alternative, the sensor may be configured to induce the current through the electrically conductive structure by the sensor providing a voltage signal across the electrically conductive structure so as to cause a current through the electrically conductive structure. Thus, the sensor may be configured to sense the temperature-induced change in resistance by sensing the current through the electrically conductive structure.

The system according to the first aspect may use the change in electrical resistance in order to deduce information relating to contact between the sensor and the object or fluid.

The object may be any type of object, which may be homogeneously formed by a single material having a homogeneous thermal property or which may comprise a plurality of materials in an object with a homogeneous thermal property or a thermal property that may vary from a surface of the object into the object. The object may be in solid state.

The fluid may be any type of fluid in gaseous or liquid state. The fluid of interest may form a homogeneous fluid with a homogeneous thermal property. However, the system may be used in relation to an arrangement including further fluid(s). For instance, a reservoir may be partly filled with the fluid of interest and remaining parts may be filled with air. The system may thus be configured to determine contact information in order to determine whether the sensor is immersed in the fluid of interest, such that the system may be used for determining whether a level of the fluid of interest in the reservoir exceeds a threshold corresponding to a position in which the sensor of the system is mounted.

The sensor may be any type of sensor that may sense a temperature-induced change in resistance. For instance, the sensor may be a resistive temperature detector (RTD).

The electrically conductive structure may be formed by a metal. However, it should be realized that other conducting or semi-conducting materials may be used. The electrically conductive structure may be exposed on a surface of the system to facilitate heat exchange with the environment (object or fluid of interest).

It should be realized that the sensor may comprise a protection layer protecting the electrically conductive structure. Thus, the electrically conductive structure need not be in direct contact with the object or fluid of interest. Rather, a protection layer may be arranged between the electrically conductive structure and the environment. An effect of a layer, such as a protection layer, being arranged between the electrically conductive structure and the object or fluid of interest may be taken into account, for instance by ignoring initial data of a temperature response curve.

The sensor is configured to sense a temperature-induced change in resistance of the electrically conductive structure, wherein the resistance is dependent on heat exchange between the electrically conductive structure and the environment. If the sensor is in complete contact with the object or fluid, the heat exchange may only occur between the electrically conductive structure and the object or fluid of interest. This may occur if a surface of the object of interest fully covers a surface of the electrically conductive structure or if the electrically conductive structure is fully immersed in the fluid of interest. However, the object or fluid of interest may be arranged in an environment, such as the object or fluid being surrounded by air or another gaseous or liquid fluid. Thus, if the object or fluid of interest makes partial or no direct contact with the electrically conductive structure, the heat exchange may partially or fully occur between the electrically conductive structure and the fluid surrounding the object or fluid of interest.

The processor unit may be implemented as a general-purpose processing unit, such as a central processing unit (CPU), which may execute instructions of one or more computer programs in order to implement appropriate functionality. However, the processor unit may alternatively be implemented as firmware arranged, e.g., in an embedded system, or as a specifically designed processor unit, such as an Application-Specific Integrated Circuit (ASIC) or a Field-Programmable Gate Array (FPGA).

The sensor and the processor unit may be arranged in a common housing such that the system may be provided as a single physical entity. However, it should be realized that the sensor and the processor unit may be arranged in different housings. While the sensor needs to be arranged such that contact with the object or fluid of interest is enabled, the processor unit may be arranged in any remote location. Thus, the processor unit may be arranged in a separate housing and may be configured to communicate with the sensor through wired or wireless communication. For instance, the processor unit may be arranged in a separate housing which is configured to be arranged in vicinity to the sensor. Thus, the sensor may be arranged in a compact, small-size package or housing, which may facilitate providing the sensor for making contact with an object or fluid in a small space. However, the processor unit need not even be arranged in vicinity to the sensor but may rather be arranged anywhere, such as in a server "in the cloud".

The system may be configured to determine contact information in real-time or almost real-time. This may be facilitated by the processor unit being arranged in a common housing with the sensor, although such arrangement is not necessary for real-time processing. Thanks to the use of real-time processing, the system may allow continuous monitoring of contact information. For instance, if the system is used in association with temperature measurements being performed, reliability of the temperature measurements may be provided at the same time as the temperature measurements are performed.

However, it should be realized that the system may alternatively be configured to perform post-measurement analysis. For instance, a sequence of measurements relating to contact information may be acquired over a (long) period of time. In addition, other measurements, such as temperature measurements, may also be acquired during the period of time. The processor unit may be configured to analyze the measurements after the entire sequence of measurements have been acquired. Then, the determined contact information may for instance be used for determining reliability of each temperature measurement in the sequence and the processor unit may further take such reliability into account for further analysis of the sequence of temperature measurements.

It should be realized that real-time and post-measurement analysis may be used in any application.

The determining of contact information may refer to determining a quantitative measure of contact. However, the determining of contact information may alternatively refer to determining information relating to contact between the sensor and the object or the fluid so as to allow identifying changes in the contact without necessarily determining the quantitative measure of contact.

According to an embodiment, the processor unit is configured to process the sensed temperature-induced change in resistance in relation to previous data for determining a change in contact between the sensor and the object or the fluid.

The system may be used for determining whether contact between the sensor and the object or the fluid is stable. This may be utilized in order to identify occurrence of any change in settings between the sensor and the object or fluid, e.g., due to vibrations, contraction, and expansion of materials, or presence of dirt.

Thus, the system need not necessarily determine any quantitative quality measure relating to the contact between the sensor and the object or fluid. Rather, the system may be configured to identify changes, which may be used as an indication that contact between the object and the sensor can be disturbed or lost.

The determining of a change in contact may be used for triggering an alert that an action is to be taken. If the system is used in association with temperature or other measurements, the determining of the change in contact may be used for indicating that measurements are not reliable or that the measurements should at least not be blindly trusted.

The determining of the change in contact may comprise comparing a current measure of the temperature-induced change in resistance to one or more previous measures of the temperature-induced change in resistance. For instance, the current measure may be compared to the immediately preceding measure or may be compared to an initial measure being used as a baseline measure. Alternatively, the current measure may be compared to an average of a plurality of preceding measures.

In addition, the determining of the change in contact may comprise determining a difference based on the comparing of the current measure of the temperature-induced change in resistance to one or more previous measures of the temperature-induced change in resistance and comparing the difference to a threshold. Thus, the system may be configured to determine that a change in contact between the sensor and the object or the fluid has occurred only when a substantial change in the temperature-induced change in resistance has occurred. This may imply that the system will not indicate that a change in contact has occurred merely based on variations in the temperature-induced change in resistance that are not due to an actual change in contact but may instead be based on, for instance, background noise of the measurements.

The processor unit has access to information of a thermal property of the object or the fluid and the processor unit is configured to process the sensed temperature-induced change in resistance based on the information of the thermal property of the object or fluid for determining said contact information.

The system may thus utilize information of thermal property of the object or fluid. Thus, the contact information may be determined based on prior knowledge of the thermal property of the object or fluid in relation to which contact information is to be determined. Knowing the thermal property, an expected temperature-induced change in resistance may be defined and, sensing any deviation from the expected temperature-induced change in resistance may be used for determining the contact information.

The system may be set up for determining contact information in a particular application, where contact information is always determined in relation to a particular type of object or fluid. Thus, the thermal property of the object or fluid is known because the system will always determine contact information in relation to the particular type of object or fluid.

For instance, the system may be used in a particular setting, wherein temperature measurements of objects or fluids of a single type are to be performed. Using the thermal property of the object or fluid, the contact information may be determined based on the sensed temperature-induced change such that reliability of the temperature measurement may be determined.

However, it should be realized that the system need not necessarily be used for determining contact information with only a single type of object or fluid. For instance, the processor unit may have access to information of thermal property for several different types of objects and/or fluids. The relevant thermal property information may then be used on each occasion of determining contact information.

The processor unit may separately receive information as to which thermal property information to be used. For instance, the system may comprise an additional sensor which may be able to determine the type of object or fluid that is in contact or in vicinity of the sensor. If the system is to be used such that only a few types of objects and/or fluids are possible, the additional sensor may be a simple sensor for sensing a property that may be used for identifying the type of object or fluid. For instance, the additional sensor may be configured to sense an optical, electrical, or magnetic property of the object or fluid in order to identify the type of object or fluid. As yet another alternative, the processor unit may receive information of the type of object or fluid or the thermal property by manually provided input.

The thermal property may be based on pre-stored information that is accessible by the processor unit. Alternatively, the thermal property may be based on calibration information that may be obtained before the system is taken into use for determining contact information.

The system may comprise a storage unit, such as any type of memory, storing the information of the thermal property of the object or the fluid. The processor unit may be configured to read information from the storage unit for accessing the information of the thermal property. However, it should be realized that the information of the thermal property need not necessarily be stored within a unit of the system. Rather, the processor unit may be configured to access the information of the thermal property from an external device. For instance, the system may comprise a communication unit allowing wired or wireless communication with the external device for providing access to the information of the thermal property. For instance, communication with the external device may be performed through a telecommunication and/or computer network, such as the Internet.

The processor unit may have access to at least one thermal property of the object or fluid of interest. For instance, the processor unit may have access to information of at least one of thermal effusivity, density, thermal conductivity, or specific heat of the object or fluid.

It should be realized that if the processor unit is configured to determine a change in contact between the sensor and the object or the fluid, the processor unit need not necessarily have access to the thermal property of the object or the fluid. In such case, a change in contact may still be determined without any quantitative measure of contact being determined. However, it should be realized that a change in contact may also be determined by a processor unit being configured to process the sensed temperature-induced change in resistance based on the information of the thermal property of the object or fluid for determining said contact information

According to an embodiment, the processor unit further has access to information of a thermal property of a matter surrounding the object or the fluid.

Thus, the processor unit may have access to both the thermal property of the object or fluid of interest and the thermal property of the matter surrounding the object. Using this information, the processor unit may be configured to accurately and reliably quantify the contact between the sensor and the object or the fluid.

However, it should be realized that conclusions relating to contact between the sensor and the object or fluid of interest may be drawn even without the processor unit knowing the thermal property of the matter surrounding the object or fluid. For instance, if the system is arranged in an arrangement providing control of the matter surrounding the object or fluid, it may be ensured that the thermal property of the object or fluid is clearly different from the thermal property of the matter surrounding the object or fluid, even if the processor unit does not have any access to information the actual thermal property of the surrounding matter.

The processor unit is configured to determine contact information in relation to a total area of the electrically conductive structure.

The electrically conductive structure may be arranged to define an area. The area encompassing the entire electrically conductive structure may be referred to as the total area.

It should be realized that the electrically conductive structure may comprise a thin line or wire of electrically conductive material which is arranged in a pattern, such as a meandering pattern, so as to fill the total area.

Thus, the total area of the electrically conductive structure may define a sensitive area of the sensor. Heat exchange between the electrically conductive structure and the environment (the object or fluid of interest or surrounding matter) may occur in the entire total area. This implies that, if the object or fluid of interest only makes partial contact with the total area, i.e., only covers part of the total area, heat exchange may for a first portion of the total area occur between the electrically conductive structure and the object or fluid of interest and for a second portion of the total area occur between the electrically conductive structure and the matter surrounding the object or the fluid.

The processor unit is configured to determine contact information as a percentage of the total area of the electrically conductive structure making contact with the object or the fluid.

This may provide a quantitative measure of the contact between the electrically conductive surface and the object or the fluid of interest. The quantitative measure may be used as input relating to reliability of other measurements.

For instance, if the system is used in association with a contact temperature sensor, the quantitative measure of the contact information may provide input whether temperature measurements of the contact temperature sensor may be trusted.

According to an embodiment, the sensor is further configured to acquire a measurement of the temperature-induced change in resistance for determining a temperature of the object or the fluid, wherein the processor unit is configured to process the measurement to determine a temperature of the object or the fluid.

Thus, in addition to using measurements of the sensor for determining contact information, the sensor may further be used for determining the temperature of the object or the fluid. This implies that the sensor may in itself be used for determining the temperature of the object or fluid of interest and also for determining the reliability of the temperature measurements.

This may facilitate providing a compact arrangement of a temperature sensor that further provides input of reliability of temperature measurements. However, it should be realized that the system may alternatively incorporate a contact temperature sensor which is separate from the sensor for enabling determining contact information.

According to an embodiment, the sensor is configured to acquire the measurement based on the current being induced through the electrically conductive structure being below a self-heating current such that the current being induced is smaller than a threshold for causing heating of the electrically conductive structure.

Using a current below the self-heating current may ensure that the measurement of temperature does not induce a change in the temperature of the object or fluid. This ensures that the temperature may be measured accurately.

However, it should be realized that the current induced through the electrically conductive structure need not necessarily be below the self-heating current. Rather, a current above the self-heating current may be used, which may cause a (slight) change of the temperature of the object or fluid such that a small offset of the absolute temperature of the object or fluid is caused, and that the absolute temperature may not be entirely correctly determined. This may still be allowed when it is desired to identify a change in temperature rather than to determine an exact absolute temperature of the object or fluid of interest.

According to an embodiment, the processor unit is configured to, based on the contact information, verify whether the measurement is acquired with appropriate contact with the object or the fluid.

Thus, the contact information determined by the processor unit may be used for verifying temperature measurements. This implies that the processor unit may output an indication when appropriate contact with the object or the fluid is not provided allowing any actions or analysis based on the temperature measurements to be made taking the contact information into account.

When appropriate contact with the object or fluid is present, no output from the processor unit may be needed.

It should be realized that appropriate contact may imply that the entire electrically conductive structure is in direct contact with the object or fluid of interest, e.g., 100% of the total area of the electrically conductive structure makes contact with the object or fluid of interest. However, appropriate contact may not necessarily mean that 100% of the total area of the electrically conductive structure needs to make contact with the object or fluid of interest. Rather, the processor unit may be configured to determine that the percentage of the total area of making contact with the object or the fluid exceeds a threshold, such as 90% or 95%, for which it is considered that the temperature measurement may still be trusted.

As yet another alternative, the system may verify whether appropriate contact is provided based merely on detecting a change in contact. For instance, an initial determination of appropriate contact may be manually verified while a first measurement of contact information is performed. Then, as long as no or acceptable changes (due to normal variations) are determined by further measurements, the processor unit may verify that such measurements are acquired with appropriate contact with the object or the fluid. Thus, it may not be necessary to determine a quantitative measure of the contact information in order to enable verifying of appropriate contact.

According to an embodiment, the sensor is configured to sense the temperature-induced change in resistance of the electrically conductive structure for determining contact information based on the current being induced through the electrically conductive structure being above the self-heating current such that the current being induced is larger than the threshold.

Thus, a larger current may be used for determining contact information compared to a current used for temperature measurements. Using a current above the self-heating current implies that the electrically conductive structure is heated for providing heat exchange with the object or fluid of interest and/or the surrounding matter.

It should be realized that regardless whether the system is to be further used for temperature measurements or not, the current used for determining contact information may be above the self-heating current.

Since a (small) heating of the object or fluid may be provided when determining contact information, the system may be configured to allow for a cool-down period before further measurements, such as temperature measurements are made. The cool-down period may be set to a worst case situation to ensure cooling down of the object or fluid or the surrounding matter that may be heated by the contact information measurement. However, other approaches may be used, such as determining a duration of the cool-down period in dependence of a percentage of the total area making contact with the object or fluid.

According to an embodiment, the processor unit is configured to determine the temperature of the object or the fluid taking a degree of contact with the object or fluid into account.

Thus, the system may be configured to perform temperature measurements and further determine a quantitative measure of contact information. The contact information may be used for ensuring that the temperature measurement is correct.

This implies that the contact information may be used such that accurate temperature measurements may still be provided even though only a portion of the sensor makes contact with the object or fluid of interest. This implies that temperature measurements made under sub-optimal conditions need not be discarded but may rather be used by taking the contact information into account and adjusting the temperature measurement based on the contact information. It should be realized that adjusting the temperature measurement may also need to take further factors into account, such as a temperature of the environment.

According to an embodiment, the sensor is configured to sense the temperature-induced change in resistance of the electrically conductive structure for determining contact information based on a current pulse being applied to the electrically conductive structure, wherein the current pulse is sufficiently short to prevent probing beyond a boundary of the object or the fluid in a direction perpendicular to an area of the electrically conductive structure.

A probing depth in the object or fluid when sensing the temperature-induced change is associated with a duration of the current pulse. Thus, if a longer pulse is used, the heat exchange may penetrate further into the object or fluid and, thus, the sensed change in resistance may be affected by heat exchange extending deeper into the object or fluid. In this context, depth is considered to extend from a surface or interface in contact with the sensor into the object or fluid in a direction perpendicular to the surface or interface.

The object or fluid may have a limited thickness. The duration of the current pulse may be sufficiently short such that the probing depth does not exceed the thickness of the object or fluid of interest. This may ensure that influence of matter beyond the boundary of the object or fluid on determining contact information may be avoided.

However, it should be realized that the current pulse need not necessarily be so short that no probing beyond the boundary of the object or fluid is provided. It should be realized that the sensor may detect a time sequence of data points, wherein first data points in the sequence may only be affected by characteristics of matter close to the sensor whereas later data points may be affected by a larger probing depth. Thus, when a probing depth extends beyond the boundary of the object or fluid, data points corresponding to a probing depth beyond the boundary of the object or fluid may be discarded or not considered.

According to an embodiment, the processor unit is configured to compare a characteristic of the sensed temperature-induced change in resistance during the current pulse being applied to an expected characteristic based on the information of a thermal property of the object or the fluid.

Thus, the information of the thermal property of the object or the fluid may provide information of an expected response to the applied current pulse. The sensed response may be compared to the expected response for determining the contact information.

The characteristic may for instance be a slope of the change in resistance caused by the applied current. However, it should be realized that another characteristic may be used. For instance, the change in resistance may be modeled and any parameter of the model may be used as the characteristic to be analyzed.

According to an embodiment, the system further comprises a holder, wherein the sensor is arranged in the holder being arranged to receive the object or the fluid.

The holder for receiving the object or the fluid may control a location of the object or the fluid. This may be suitable for analysis of the object or fluid in that the holder allows the object or fluid to be presented for analysis. Thanks to the system being able to determine contact information, the system may provide information whether the object or fluid is properly arranged in an analysis position and, hence, verify whether analysis is performed with appropriate contact with the object or the fluid.

According to an embodiment, the system further comprises an array of sensors, wherein the processor unit is configured to determine contact information across the array of sensors based on receiving sensed temperature-induced changes in resistance from the array of sensors.

If a two-dimensional array is used, this implies that the system may provide contact information across a two-dimensional area. If a one-dimensional array is used, the system may provide contact information along a line (one dimension). Each sensor in the array of sensors may provide contact information with the object or fluid in the respective location of the sensor.

If combined with temperature measurements, the system may be configured to verify whether temperature measurements are performed with appropriate contact with the object or the fluid in each sensor location and the system may further be configured to provide two-dimensional thermal mapping.

According to an embodiment, the processor unit is configured to process the sensed temperature-induced change in resistance for determining a distance to the object or the fluid.

The system may be configured to identify changes in a thermal property along the probing depth provided by the current pulse. Using knowledge of the thermal property of matter surrounding the object or fluid as well as the thermal property of the object or fluid of interest, the system may be configured to determine the distance to the object or fluid if direct contact with the sensor is not present.

The system may be configured to determine the distance to the object or fluid for short distances between the sensor and the object or fluid. This may be useful for quantifying the distance and/or for identifying that the sensor is in proximity of the object or fluid.

According to an embodiment, the processor unit is configured to process the sensed temperature-induced change in resistance for quantifying roughness of a surface of the object.

Thus, the contact information may be used for quantifying roughness. For instance, if there is a large roughness of the surface of the object, the object may not make contact with the electrically conductive structure of the sensor over the entire area of the sensor, which may be identified in the contact information. Thus, the contact information may provide a measure of roughness of the surface of the object.

According to a second aspect, there is provided a method for determining contact with an object or a fluid, said method comprising: inducing a current through an electrically conductive structure of a sensor; sensing a temperature-induced change in resistance of the electrically conductive structure, wherein the temperature-induced change in resistance is dependent on heat exchange with the electrically conductive structure and an environment; and processing the sensed temperature-induced change in resistance for determining contact information between the sensor and the object or the fluid; wherein the sensed temperature-induced change in resistance is processed based on information of the thermal property of the object or fluid for determining said contact information; wherein the processing determines contact information in relation to a total area of the electrically conductive structure and wherein the processing determines contact information as a percentage of the total area of the electrically conductive structure making contact with the object or the fluid.

Effects and features of this second aspect are largely analogous to those described above in connection with the first aspect. Embodiments mentioned in relation to the first aspect are largely compatible with the second aspect.

The method allows determining contact information between the sensor and the object or fluid based on sensing a temperature-induced change in resistance of the sensor. This is a simple manner of determining contact information.

According to a third aspect, there is provided a computer-implemented method for determining contact with an object or a fluid, said method comprising: receiving data indicative of a temperature-induced change in resistance of an electrically conductive structure, wherein the temperature-induced change in resistance is dependent on heat exchange with the electrically conductive structure and an environment; processing the received data for determining contact information between a sensor acquiring the data and the object or the fluid; wherein the temperature-induced change in resistance is processed based on information of the thermal property of the object or fluid for determining said contact information; wherein the processing determines contact information in relation to a total area of the electrically conductive structure and wherein the processing determines contact information as a percentage of the total area of the electrically conductive structure making contact with the object or the fluid.

Effects and features of this third aspect are largely analogous to those described above in connection with the first and second aspects. Embodiments mentioned in relation to the first and second aspects are largely compatible with the third aspect.

Thus, according to the third aspect, there is provided a method allowing data indicative of the temperature-induced change in resistance to be processed such that contact information between a sensor that acquires the data of the temperature-induced change in resistance and the object or fluid is determined.

The method according to the third aspect provides the processing for determining the contact information based on data acquired by the sensor. Any of the embodiments relating to processing of the temperature-induced change in resistance as described above may be implemented in the computer-implemented method.

According to a fourth aspect, there is provided a computer program product comprising computer-readable instructions such that when executed on a processing unit the computer program product will cause the processing unit to perform the method according to the third aspect.

Effects and features of this fourth aspect are largely analogous to those described above in connection with the first, second, and third aspects. Embodiments mentioned in relation to the first, second, and third aspects are largely compatible with the fourth aspect.

The computer program product may comprise a non-transient computer-readable medium for carrying the computer-readable instructions. Alternatively, the computer program product may comprise a signal carrying the computer-readable instructions, e.g., for communicating the computer program product to the processing unit through wired or wireless communication.

Brief description of the drawings

The above, as well as additional objects, features, and advantages of the present description, will be better understood through the following illustrative and non-limiting detailed description, with reference to the appended drawings. In the drawings like reference numerals will be used for like elements unless stated otherwise.

Fig. 1 is a schematic view of a system according to an embodiment.

Figs 2a-b are schematic views illustrating heat exchange from an electrically conductive structure due to a current applied to the electrically conductive structure, wherein the heat exchange is in dependence of thermal property of an environment.

Fig. 2c is a graph schematically illustrating a temperature response curve to a current applied to the electrically conductive structure in dependence of thermal property.

Figs 3a-b are schematic views illustrating heat exchange from the electrically conductive structure, wherein the heat exchange is in dependence of contact between the electrically conductive structure and an object.

Fig. 3c is a graph schematically illustrating a temperature response curve to a current applied to the electrically conductive structure in dependence of contact between the electrically conductive structure and the object.

Fig. 4 is another schematic view of a system according to an embodiment.

Fig. 5 is another schematic view of a system according to an embodiment provided with an array of sensors.

Fig. 6 is another schematic view of a system according to an embodiment used for determining contact to a fluid.

Fig. 7 is another schematic view of a system according to an embodiment used for determining a distance to an object.

Fig. 8 is another schematic view of a system according to an embodiment used for determining a roughness of a surface of an object.

Fig. 9 is a flow chart of a method according to an embodiment.

Detailed description

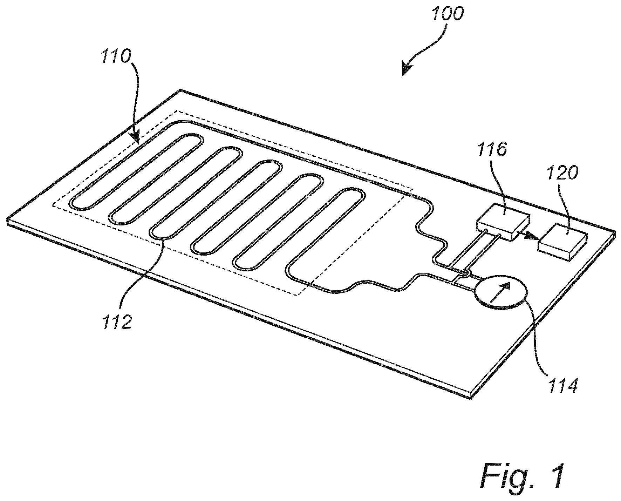

Referring now to Fig. 1, a system 100 for determining contact with an object or a fluid will be described. The system 100 comprises a sensor 110 and a processor unit 120.

As discussed further below, the sensor and the processor unit may be arranged in a common physical housing but need not necessarily be so arranged. Below, reference will mainly be made to a device that comprises the sensor and the processor unit in a common physical housing. However, it should be realized that the system need not necessarily be implemented in a single physical housing and, it should be realized that the discussion of the device below would apply equally well to a system, wherein the sensor and the processor unit are not arranged in the same physical housing.

The sensor 110 comprises an electrically conductive structure 112. The electrically conductive structure 112 may be an electrically conductive wire which is arranged in a pattern on a surface area of the sensor 110 such that the wire defines a two-dimensional sensor area. For instance, the wire may be arranged in a double-spiral pattern or meandering over a square-shaped sensor area.

The electrically conductive wire may be formed from any electrically conducting or semi-conducting material, such as a metal or a semiconductor material. The electrically conductive wire may be arranged on a substrate providing a support for the electrically conductive wire.

The sensor 110 further comprises a current source 114 for applying a current through the electrically conductive structure 112. The current source 114 may be controlled for controlling the applied current, such as controlling the current source 114 to output current pulse(s) through the electrically conductive structure 112.

The sensor 110 may further comprise a detector 116, such as a voltage detector for detecting a voltage across the electrically conductive structure 112. The voltage detected by the voltage detector may be dependent on resistance of the electrically conductive structure 112.

The resistance of the electrically conductive structure 112 may be dependent on temperature of the electrically conductive structure 112. When a current is applied through the electrically conductive structure 112, due to Joule heating the temperature of the electrically conductive structure 112 itself increases. The temperature of the electrically conductive structure 112 may in turn be dependent on heat exchange between the electrically conductive structure 112 and the environment around the electrically conductive structure 112.

The detector 116 may thus be configured to detect a property which is dependent on temperature-induced change in resistance of the electrically conductive structure 112 such that the temperature-induced change in resistance is sensed. The sensed temperature-induced change in resistance may be transferred from the sensor 110 to the processor unit 120, which may be configured to determine contact information between the sensor 110 and an object or fluid, as will be described in further detail below.

It should be realized that the sensor 110 need not necessarily apply a current through the electrically conductive structure 112 and sense a voltage across the electrically conductive structure 112. As an alternative, the sensor 110 may be configured to apply a voltage across the electrically conductive structure 112 and sense a current through the electrically conductive structure 112. The current detected may be dependent on resistance of the electrically conductive structure 112. The sensor 110 may thus be configured to detect a property which is dependent on temperature-induced change in resistance of the electrically conductive structure 112 such that the temperature-induced change in resistance is sensed.

Hereinafter, reference will be made to the sensor 110 applying a current through the electrically conductive structure and sensing a voltage across the electrically conductive structure. However, it should be realized that the sensor 110 may alternatively be configured to apply a voltage across the electrically conductive structure and sense a current through the electrically conductive structure.

The device 100 may be configured to utilize a resistive temperature detector (RTD) forming the sensor 110. The sensor 110 may be an RTD, which is conventionally used for temperature sensing. Alternatively, the sensor 110 may be a custom designed RTD, or the sensor 110 may be custom designed for sensing temperature-induced change in resistance that is to be used for determining contact information.

The sensor 110 may be arranged on a surface of a substrate, such that the sensor 110 is to make contact with an object or a fluid at the surface. A back-side of the sensor (facing away from the surface at which contact with the object or fluid is to take place) may be in contact with a low thermal conducting reference material, such as static air or a low thermal conducting substrate. However, it should be realized that the back-side of the sensor may also be configured to make contact with the object or fluid at the back-side.

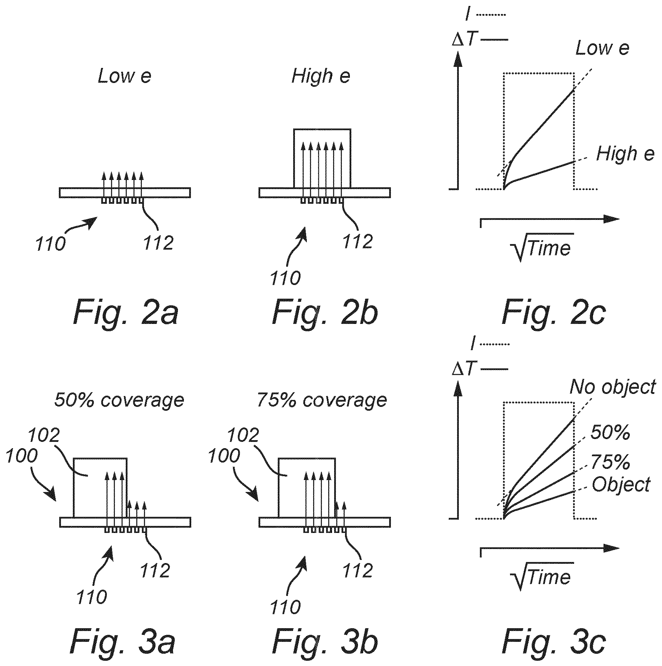

Referring now to Figs 2a-c, the sensing by the sensor 110 of temperature-induced change in resistance relevant for determining contact information will be explained by first describing a measurement method for determining a thermal property (not contact information) of a material.

The sensor 110 may be configured to utilize a measurement which is used in transient plane source (TPS) methods for determining thermal properties of a material. The use of a single-sided operation mode of the TPS method may be referred to as the modified transient plane source (MTPS) method.

In a TPS measurement, a constant current pulse is applied to an electrically conductive structure, while a voltage over the structure is measured. As mentioned above, Joule heating will cause the temperature of the electrically conductive structure to increase. The electrical resistance of the electrically conductive structure will increase according to:

$$R = R_{ref}\left[1 + \alpha\left(T - T_{ref}\right)\right], \quad (Eq.\,1)$$

where R is electrical resistance of the electrically conductive structure, $R_{ref}$ is electrical resistance at reference temperature $T_{ref}$, $T$ is temperature of the electrically conductive structure, and $\alpha$ is temperature coefficient of resistance.

The temperature-induced change in electrical resistance is recorded in the voltage measurement. The electrically conductive structure may thus function as both a heater and a temperature sensor, with response to the heating being given by *Eq.* 1 above.

A shape of a temperature response curve based on applying a constant current pulse to the electrically conductive structure depends on the ability of the sensor to exchange heat with its surrounding. Thus, the shape of the temperature response curve depends on thermal effusivity (e) of the object or fluid which the sensor makes contact with. The thermal effusivity of a material is given by:

$$e = \sqrt{\kappa\rho c_p}, \qquad (Eq.\,2)$$

where $\kappa$ is thermal conductivity of the material, $\rho$ is density of the material, and $c_p$ is specific heat capacity of the material.

As illustrated in Fig. 2a, the heat exchange (indicated by arrows) due to Joule heating with a material having low thermal effusivity, such as air, will be relatively small, whereas, as illustrated in Fig. 2b, the heat exchange with a material having high thermal effusivity will be relatively large.

Referring now to Fig. 2c, the temperature response curve for the low thermal effusivity material (dashed line) and the high thermal effusivity material (dotted line) is illustrated plotted against square root of time. Fig. 2c also indicates the current pulse (solid line).

As illustrated in Fig. 2c, for the low thermal effusivity material, relatively small heat exchange occurs such that a relatively high increase in the temperature of the electrically conductive structure occurs and a corresponding relatively high increase in the electrical resistance of the electrically conductive structure occurs.

After initial non-linear parts, the temperature response curves in Fig. 2c form straight lines. The slope of the linear part of the curve is inversely proportional to the thermal effusivity of the material in contact with the sensor.

In TPS measurements, good thermal contact between the object and the sensor is required. Further, before a current pulse is applied, the temperature of the object should be at equilibrium with the sensor and surroundings. Further, a probing depth of the applied pulse should not exceed physical boundaries of the object such that heat exchange will only take place with the object. This implies that material surrounding the object will not influence the measured slope.

Referring now to Figs 3a-c, determining of contact information in relation to the sensing by the sensor 110 will be discussed in further detail. Although discussion below is made in relation to a (solid) object 102, it should be realized that the sensor 110 may instead be used with a fluid.

Contrary to the discussion of TPS measurements above, the sensor 110 is used with an object or fluid of interest, wherein good thermal contact cannot be guaranteed during measurements. Further, the object or fluid is not necessarily at equilibrium temperature with the surrounding environment.

Figs 3a-b illustrate two situations with differing thermal contact quality between the sensor 110 and an object 102. In the situation illustrated in Figs 3a-b, the object 102 has a relatively high thermal effusivity and is surrounded by a material of relatively low thermal effusivity, such as air. In Fig. 3a, the object 102 covers 50% of the sensor area, whereas, in Fig. 3b, the object 102 covers 75% of the sensor area.

If the current pulse applied to the electrically conductive structure 112 is sufficiently short, heat exchange will not extend beyond a boundary of the object 102 and the sensed temperature-induced change in resistance may be regarded as a measurement in relation to two infinite media, namely the object 102 (with high thermal effusivity) and the surrounding material (such as air, with low thermal effusivity).

However, it should be realized that the current pulse need not necessarily be short to avoid probing beyond the boundary of the object 102. Instead, the temperature response curve may only be considered during an initial period of time in order for measurements not to be influenced by the heat exchange occurring beyond the boundary of the object 102.

Contact quality between the object 102 and the sensor 110 will affect the temperature response curve based on the applied current. The contact quality may be specified by a ratio of the sensor area (electrically conductive structure 112) being in contact with the object 102 versus being in contact with the surrounding material.

As illustrated in Fig. 3c, when the temperature response curve is plotted against square root of time, the linear parts of the curve are dependent on a percentage of the sensor area making contact with the object 102. Thus, two extreme cases of the sensor 102 being fully in contact with the object 102 and no object 102 being present at all may define a minimum and maximum slope of the temperature response curve. If the object 102 is not perfectly aligned with the sensor 110, the temperature response curve will provide a slope that is dependent on how large percentage of the electrically conductive structure 112 of the sensor 110 is in contact with the object 102.

The device 100 may be configured to utilize the sensed temperature-induced change in resistance acquired by the sensor 110 in order to determine a quantitative measure of the contact between the sensor 110 and the object 102. However, the device 100 may alternatively be configured to identify that the temperature response curve differs from an ideal curve of complete contact between the sensor 110 and the object 102. According to yet another alternative, the device 100 may be configured to identify that the temperature response curve has changed in relation to previous contact measurements, such that the device 100 may deduce that a change in contact has occurred. The device 100 may for instance be used for providing an alert when complete contact is not occurring. For instance, in some applications, complete contact between the sensor 110 and the object 102 is desired, and corrective action is to be taken as soon as complete contact is not occurring. The alert may thus be used to, e.g., discard any measurement results acquired when complete contact between the sensor 110 and the object 102 was not provided. The device 100 may thus be used as a verification tool for verifying when proper conditions are provided for other measurements.

The processor unit 120 is configured to receive the sensed temperature-induced change in resistance from the sensor 110. The processor unit 120 may for instance be configured to receive sensor data representative of the temperature response curve described above.

The processor unit 120 may further have access to information of a thermal property of the object or fluid. The processor unit 120 may be configured to communicate with a storage element storing the thermal property of the object or fluid in order to access the information of the thermal property. The storage element may be part of the device 100 and may be arranged in a common housing with the processor unit 120. Alternatively, the storage element may be arranged remotely from the processor unit 120 and the processor unit 120 may be configured to access the information via wired or wireless communication.

As yet another alternative, the processor unit 120 may be configured to receive information of the thermal property of the object or fluid via a communication interface of the device 100, such that the information may be provided through manual input. The information of the thermal property may then be (temporarily) stored in a memory of the device 100. This implies that the information of the thermal property of the object or fluid may be provided at a moment when contact information is to be determined, such that the device 100 may be provided with relevant information at the moment it is needed. This enables the device 100 to be adapted for determining contact information in different situations.

The processor unit 120 may be configured to process the received data from the sensor 110 in view of the information of thermal property of the object or fluid. The processor unit 120 may in this manner determine contact information.

The processor unit 120 may determine an expected slope of the temperature response curve based on the thermal property of the object or fluid. The processor unit 120 may further determine a sensed slope of the temperature response curve based on the received sensor data, i.e., the sensed temperature-induced change in resistance. The processor unit 120 may further be configured to compare the slopes to determine whether the slopes correspond to each other or not. If the slopes correspond to each other, the processor unit 120 may determine that complete contact between the sensor 110 and the object or fluid occurs.

It should be realized that the processor unit 120 need not necessarily know the thermal property of the surrounding material, at least not if it is known or established that the thermal property of the surrounding material differs substantially from the thermal property of the object or fluid of interest. In such case, a deviation of the sensed slope from the expected slope may be used as an indication that complete contact between the sensor 110 and the object or fluid does not occur.

However, if it is further desired to enable quantifying contact quality between the sensor 110 and the object or fluid of interest, the processor unit 120 may also need access to the thermal property of the matter surrounding the object or fluid. The processor unit 120 may be provided access to the thermal property of the surrounding material in the same manner as provided access to the thermal property of the object or fluid as described above.

The processor unit 120 may determine expected slopes of the temperature response curve for different contact qualities (percentages of total area of the electrically conductive structure 112 making contact with the object or fluid) based on the thermal property of the object or fluid as well as the thermal property of the surrounding material. The processor unit 120 may further determine a sensed slope of the temperature response curve based on the received sensor data, i.e., the sensed temperature-induced change in resistance. The processor unit 120 may further compare the sensed slope based on the received sensor data to the expected slopes for determining the contact quality.

It should be realized that the thermal property to which the processor unit 120 has access may be thermal effusivity. However, another thermal property and/or further thermal properties may be used by the processor unit 120. For instance, the processor unit 120 may have access to thermal conductivity, specific heat capacity and/or density of the object or fluid (and the surrounding material).

Above, it is described that the processor unit 120 may be configured to compare slopes of the temperature response curves. However, it should be realized that the processor unit 120 may determine contact information in another manner. For instance, the processor unit 120 may be configured to model heat exchange between the sensor 110 and the object or fluid and the surrounding material based both on the received sensor data and the thermal properties of the object or fluid and the surrounding material. The processor unit 120 may be configured to determine any characteristic of the model and may be configured to determine contact information based on the one or more determined characteristics.

As yet another alternative, the processor unit 120 may be configured to process the sensed temperature-induced change in resistance in relation to previous data for determining a change in contact between the sensor and the object or the fluid. For instance, an initial or previous measurement of a slope of the temperature response curve may be used as an expected slope of the temperature response curve. The processor unit 120 may further determine a sensed slope of the temperature response curve based on the received sensor data, i.e., the sensed temperature-induced change in resistance. The processor unit 120 may further compare the sensed slope based on the received sensor data to the expected slopes for determining whether a change in contact between the sensor and the object or the fluid has occurred.

The processor unit 120 may be implemented as a general-purpose processing unit, such as a central processing unit (CPU), which may execute instructions of one or more computer programs in order to implement appropriate functionality. However, the processor unit 120 may alternatively be implemented as firmware arranged, e.g., in an embedded system, or as a specifically designed processor unit 120, such as an Application-Specific Integrated Circuit (ASIC) or a Field-Programmable Gate Array (FPGA).

The sensor 110 and the processor unit 120 may be arranged in a common housing such that the device 100 may be provided as a single physical entity. However, it should be realized that the sensor 110 and the processor unit 120 may be arranged in different housings. While the sensor 110 needs to be arranged such that contact with the object or fluid of interest is enabled, the processor unit 120 may be arranged in any remote location. Thus, the processor unit 120 may be arranged in a separate housing and may be configured to communicate with the sensor 110 through wired or wireless communication. For instance, the processor unit 120 may be arranged in a separate housing which is configured to be arranged in vicinity to the sensor 110. However, the processor unit 120 need not even be arranged in vicinity to the sensor 110 but may rather be arranged anywhere, such as in a server "in the cloud".

The device 100 is described above in a general perspective without reference to any specific application. Below, some applications will be described, wherein the device 100 may be used. Although the device 100 may be adapted to the different applications, reference is made to the device 100 of Fig. 1, since the features described above for the device 100 may apply to any of the below applications.

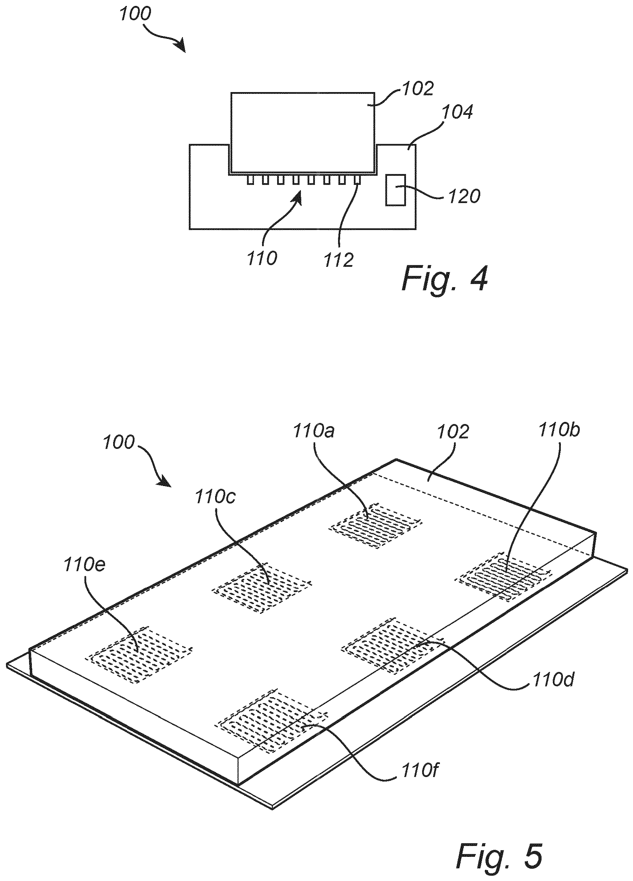

Referring now to Fig. 4, the device 100 may be used in a setting where temperature measurements of an object 102 are performed. The temperature measurements are performed by contact temperature sensing, such that the object 102 for which the temperature is to be measured is in contact with a temperature sensor. As described below, the sensor 110 may be used both for sensing data allowing contact information to be determined and for temperature measurements. However, it should be realized that the device 100 may alternatively comprise a separate contact temperature sensor or the device 100 may be used in an arrangement which includes the separate contact temperature sensor.

The device 100 may comprise a holder 104, which may be configured to receive the object 102 of interest. The holder 104 may thus comprise a structure adapted to a shape of the object 102 such that the holder 104 may be configured to receive the object 102 with a close fit of the object 102 to the holder 104. This may facilitate that a good contact between the object 102 and the temperature sensor may be provided. However, the device 100 may be used in an environment, where the device 100 is subject to vibrations, contraction or expansion of materials, presence of dirt, etc., which may imply that the contact between the contact temperature sensor and the object 102 may be disturbed or lost. Therefore, the determining of contact information by the device 100 may provide important aid for identifying when temperature measurements may not be trusted due to loss of contact.

It should be realized that the device 100 may be used with another sensor for detecting any other parameter than temperature, wherein contact between the sensor and the object or fluid is important for quality of measurements. However, the device 100 is of particular interest when used with temperature measurements since the same sensor 110 may be used both for temperature measurements and for contact measurements.

Thus, the sensor 110 may be configured to acquire a measurement of the temperature-induced change in resistance for determining the temperature of the object 102. The processor unit 120 may thus be configured to process the measurement to determine a temperature of the object 102.

The processor unit 120 may alternatingly use the sensor 110 for determining the contact information and for determining the temperature of the object 102. For instance, the device 100 may be configured, before or after each temperature measurement, to perform measurements for determining contact information. Thus, if the contact information indicates that complete contact between the sensor 110 and the object 102 is not provided, the device 100 may output an alert to an operator that corrective action is needed, and the temperature measurement need not be performed or may be discarded as faulty. The processor unit 120 may thus be configured to, based on the contact information, verify whether the temperature measurement may be acquired with appropriate contact with the object 102. It should also be realized that the contact information may not necessarily be performed in association to each temperature measurement but may be performed intermittently, such as once for every 5 or 10 temperature measurements.

The processor unit 120 may use the temperature response curve as discussed above for determining the temperature of the object 102. With knowledge that complete contact is established between the object 102 and the sensor 110, the processor unit 120 may further determine the temperature of the object 102.

When the temperature of the object varies, this corresponds to a difference in an initial value of the temperature $T$ in $Eq.$ 1, such that the temperature response curve will be offset along the y-axis of Fig. 3c in dependence of the temperature of the object. This may be used by the processor unit 120 for determining the temperature of the object 102.

It should further be realized that the device 100 may be configured such that a current being applied to the electrically conductive structure 112 when a temperature measurement is to be performed is below a self-heating current threshold. This implies that the current is sufficiently small such that the current does not cause heating of the electrically conductive structure 112. Hence, during temperature measurements, no heat may be provided by the electrically conductive structure 112 to the object 102. Instead, the temperature of the object 102 may be determined based on a constant detected resistance, which may be used for determining the temperature of the object 102. However, it should be realized that the temperature measurements need not necessarily be performed using a current below the self-heating current.

When the sensor 110 is used for sensing temperature-induced change in resistance for determining contact information, the current applied to the electrically conductive structure 112 may be above the self-heating current threshold. This implies that heat exchange may occur with the environment to allow the contact information to be determined.

It should be realized that, since heat exchange occurs during acquiring of sensor data for determining contact information, slight heating of the object 102 may occur when performing measurements for determining contact information. Thus, after contact information has been determined, a cooling-down period may be used before another temperature measurement is performed. The cooling-down period may allow the object 102 to cool down after the contact information measurement such that the heating of the object 102 by the contact information measurement does not affect the temperature measurements of the object 102. During the cooling-down period, the object 102 may be cooled down to assume ambient temperature.

It should be further realized that, instead of merely discarding temperature measurements when there is not complete contact between the sensor 110 and the object 102, a degree of contact (such as percentage of the total area of the sensor 110 making contact with the object 102) may be taken into account when determining the temperature of the object 102. Thus, the processor unit 120 may be configured to process the temperature measurements taking the contact information into account such that the temperature may still be determined, even if there is not complete contact between the sensor 110 and the object 102. It should be realized that adjusting the temperature measurement may also need to take further factors into account, such as a temperature of the environment.

Referring now to Fig. 5, the device 100 may be configured to comprise an array of sensors 110a-f. Each of the sensors 110a-f in the array may be configured to sense a temperature-induced change in resistance as described above, such that contact information between each respective sensor 110a-f and the object or fluid may be individually determined.

Each sensor 110a-f may be configured to detect contact information with individual objects, such that the sensors 110a-f in the array may form parallel units for individually determining contact information. This may be utilized for allowing the device 100 to measure temperature of a plurality of objects in parallel, using contact information as described above.

Each of the sensors 110a-f in the array may alternatively be configured to make contact with different portions of the same object. The array of sensors 110a-f may be utilized in many different manners. For instance, if the array of sensors 110a-f are mounted on a flat surface, the array of sensors 110a-f may be configured to determine whether the object 102 is flat or identify any indentations or protrusions in the object 102. If the array of sensors 110a-f is also configured to perform temperature measurements, a two-dimensional heat map of the object 102 may be determined.

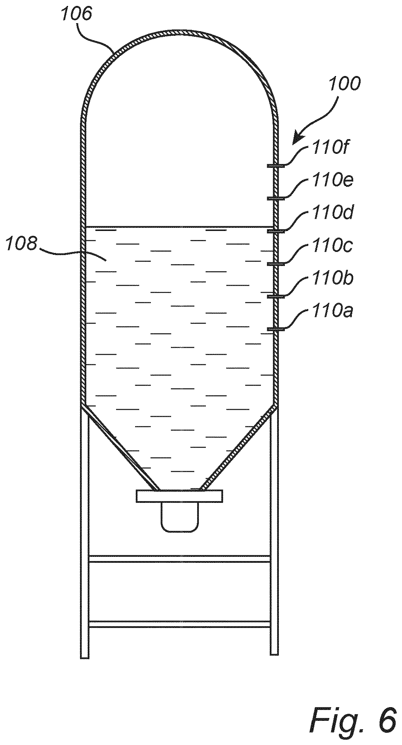

Referring now to Fig. 6, an array of sensors 110a-f may be used in association with a reservoir 106 holding a fluid, such as a liquid 108.

The sensors 110a-f may be arranged at different heights of the reservoir 106. This implies that, depending on whether the level of the liquid 108 in the reservoir 106 reaches the height at which a particular sensor 110a-f is arranged, the sensor 110a-f may either make contact with the liquid 108 or with a surrounding material, such as air.

Thanks to the device 100 enabling determining contact information between the sensors 110a-f and the liquid 108, the device 100 may be configured to determine the level of the liquid 108 in the reservoir 106. The processor unit 120 may be configured to determine, for each sensor 110a-f, whether the sensor 110a-f makes contact with the liquid 108 or with the surrounding material. In Fig. 6, the sensors 110a-d are determined to make contact with the liquid 108 and, among these sensors 110a-d, sensor 110d is the sensor that is mounted at a highest position within the reservoir 106 while making contact with the liquid. Thus, the height at which the sensor 110d is mounted may be used as an indication of the level of the liquid 108 in the reservoir 106.

The sensors 110a-f may further be used for measuring a temperature of the liquid 108 at different levels. Thanks to the device 100 being able to determine, for each of the sensors 110a-f, whether the sensor 110a-f is in contact with the liquid 108, the device 100 may ensure that temperature of the liquid 108 is determined and that any temperature measurements from sensors above the level of the liquid 108 may be discarded.

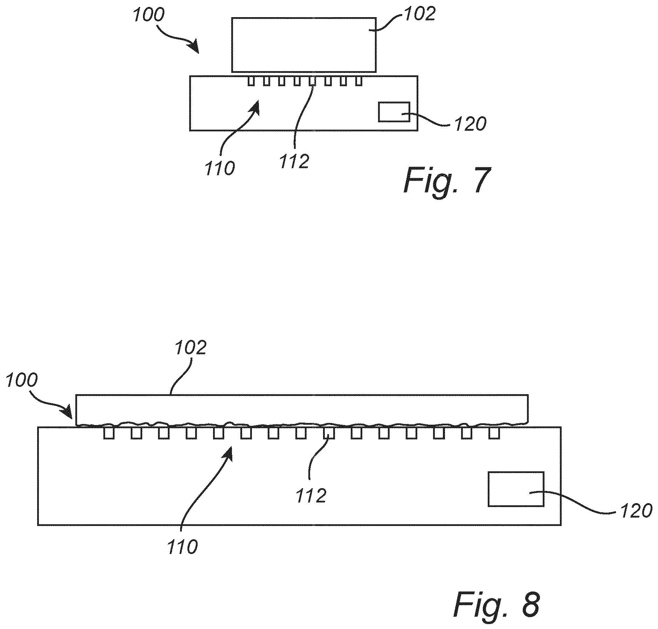

Referring now to Fig. 7, the device 100 may be configured to determine a distance between the sensor 110 and the object or fluid, illustrated here as object 102.

Thus, the processor unit 120 may be configured to process the sensed temperature-induced change in resistance received from a sensor 110 such that a distance to the object 102 may be determined. If no physical contact between the sensor 110 and the object 102 of interest is provided, the sensor 110 instead makes contact with the surrounding material, such as air. If there is also a small gap between the sensor 110 and the object 102 along a direction perpendicular to a surface of the sensor 110, heat from the electrically conductive structure 112 may propagate through the surrounding material into the object 102.

The sensor 110 may thus be configured to sense a temperature response curve which initially provides a relatively steep slope followed by a change to a gentler slope (if the surrounding material has a lower thermal effusivity than the object 102). Using knowledge of the thermal properties of the object 102 and the surrounding material, the processor unit 120 may be configured to determine the distance between the sensor 110 and the object 102.

Referring now to Fig. 8, the device 100 may be configured to quantify roughness of a surface of the object 102. As shown in Fig. 8, the device 100 may be configured such that the object 102 is placed covering the sensor area of the sensor 110. If the object 102 has a very smooth surface, the object 102 may be placed in close contact with the sensor area across the entire area. However, if the object 102 has a rugged surface, the object 102 may not be in close contact with the sensor area across the entire area. Rather, tiny pockets of surrounding material, such as air, may be arranged between the sensor 110 and the object 102 in various locations of the sensor area.

The roughness of the surface of the object 102 may thus affect how well the surface of the object 102 makes contact with the sensor 110. The heat exchange between the sensor 110 and the object 102 may thus be dependent on the roughness of the surface of the object 102. This implies that the processor unit 120 may be configured to distinguish between smooth and rugged surfaces based on the sensed temperature-induced change in resistance such that the device 100 may be used for quantifying roughness of the surface of the object 102.

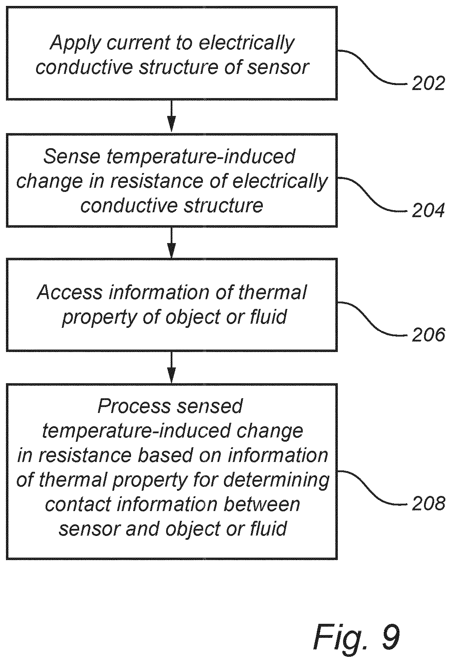

Referring now to Fig. 9, a method for determining contact with an object or a fluid will be summarized.

The method may be performed using the device 100 as described above and any of the variants of the device 100 described above may be used in the method.

The method comprises applying 202 a current to an electrically conductive structure of a sensor. The current may cause heating of the electrically conductive structure.

The method further comprises sensing 204 a temperature-induced change in resistance of the electrically conductive structure. The temperature-induced change in resistance is dependent on heat exchange between the electrically conductive structure and an environment to the electrically conductive structure.

The method may further comprise accessing 206 information of a thermal property of the object or the fluid. This implies that an expected temperature response to the heating caused by applying the current may be known or determined.

The method further comprises processing 208 the sensed temperature-induced change in resistance for determining contact information between the sensor and the object or the fluid. The sensed temperature-induced change in resistance may be processed based on the information of the thermal property of the object or fluid. The expected temperature response may be dependent on the contact between the sensor and the object or fluid, such as a percentage of a sensor area being in contact with the object or fluid, how well the object or fluid makes contact with the sensor (e.g., depending on roughness of surface), or possibly a distance between the sensor and the object or fluid.

The method may involve a computer-implemented method that performs part of the method described above. The computer-implemented method may include receiving data indicative of the temperature-induced change in resistance, wherein the data has been obtained through the sensing 204 described above. The computer-implemented method may further involve the accessing 206 of information of a thermal property of the object or the fluid and the processing 208 of the sensed temperature-induced change in resistance for determining contact information between the sensor and the object or the fluid.

In the above the inventive concept has mainly been described with reference to a limited number of examples. However, as is readily appreciated by a person skilled in the art, other examples than the ones disclosed above are equally possible within the scope of the inventive concept, as defined by the appended claims.

**Claims**

1. A system (100) for determining contact with an object (102) or a fluid (108), said system (100) comprising:

a sensor (110) comprising an electrically conductive structure (112), wherein the sensor (110) is configured to induce a current through the electrically conductive structure (112) and sense a temperature-induced change in resistance of the electrically conductive structure (112) for determining contact information, wherein the temperature-induced change in resistance is dependent on heat exchange with the electrically conductive structure (112) and an environment;

a processor unit (120) configured to receive the sensed temperature-induced change in resistance, wherein the processor unit (120) is configured to process the sensed temperature-induced change in resistance for determining contact information between the sensor (110) and the object (102) or the fluid (108);

wherein the processor unit (120) has access to information of a thermal property of the object (102) or the fluid (108) and the processor unit (120) is configured to process the sensed temperature-induced change in resistance based on the information of the thermal property of the object (102) or fluid (108) for determining said contact information;

wherein the processor unit (120) is configured to determine contact information in relation to a total area of the electrically conductive structure (112) and wherein the processor unit (120) is configured to determine contact information as a percentage of the total area of the electrically conductive structure (112) making contact with the object (102) or the fluid (108).

2. The system according to claim 1, wherein the processor unit (120) further has access to information of a thermal property of a matter surrounding the object (102) or the fluid (108).

3. The system according to any one of the preceding claims, wherein the sensor (110) is further configured to acquire a measurement of the temperature-induced change in resistance for determining a temperature of the object (102) or the fluid (108), wherein the processor unit (120) is configured to process the measurement to determine a temperature of the object (102) or the fluid (108).

4. The system according to claim 3, wherein the sensor (110) is configured to acquire the measurement based on the current being induced through the electrically conductive structure (112) being below a self-heating current such that the current being induced is smaller than a threshold for causing heating of the electrically conductive structure (112).

5. The system according to claim 4, wherein the processor unit (120) is configured to, based on the contact information, verify whether the measurement is acquired with appropriate contact with the object (102) or the fluid (108) by determining whether the percentage of the total area of the electrically conductive structure making contact with the object exceeds a threshold.

6. The system according to claim 5, wherein the sensor (110) is configured to sense the temperature-induced change in resistance of the electrically conductive structure (112) for determining contact information based on the current being induced through the electrically conductive structure (112) being above the self-heating current such that the current being induced is larger than the threshold.

7. The system according to any one of claims 3-6, wherein the processor unit (120) is configured to determine the temperature of the object (102) or the fluid (108) taking a degree of contact with the object (102) or fluid (108) into account.

8. The system according to any one of the preceding claims, wherein the sensor (110) is configured to sense the temperature-induced change in resistance of the electrically conductive structure (112) for determining contact information based on a current pulse being applied to the electrically conductive structure (112), wherein the current pulse is sufficiently short to prevent probing beyond a boundary of the object (102) or the fluid (108) in a direction perpendicular to an area of the electrically conductive structure (112).

9. The system according to claim 8, wherein the processor unit (120) is configured to compare a characteristic of the sensed temperature-induced change in resistance during the current pulse being applied to an expected characteristic based on information of a thermal property of the object (102) or the fluid (108).

10. The system according to any one of the preceding claims, further comprising an array of sensors (110a-f), wherein the processor unit (120) is configured to determine contact information across the array of sensors (110a-f) based on receiving sensed temperature-induced changes in resistance from the array of sensors (110a-f).

11. The system according to any one of the preceding claims, wherein the processor unit (120) is configured to process the sensed temperature-induced change in resistance for determining a distance to the object (102) or the fluid (108).

12. The system according to any one of the preceding claims, wherein the processor unit (120) is configured to process the sensed temperature-induced change in resistance for quantifying roughness of a surface of the object (102).

13. A method for determining contact with an object or a fluid, said method comprising:

inducing (202) a current through an electrically conductive structure of a sensor;
sensing (204) a temperature-induced change in resistance of the electrically conductive structure, wherein the temperature-induced change in resistance is dependent on heat exchange with the electrically conductive structure and an environment;
processing (208) the sensed temperature-induced change in resistance for determining contact information between the sensor and the object or the fluid;
wherein the sensed temperature-induced change in resistance is processed based on information of the thermal property of the object or fluid for determining said contact information;
wherein the processing determines contact information in relation to a total area of the electrically conductive structure and wherein the processing determines contact information as a percentage of the total area of the electrically conductive structure making contact with the object or the fluid.

14. A computer-implemented method for determining contact with an object or a fluid, said method comprising:

receiving data indicative of a temperature-induced change in resistance of an electrically conductive structure, wherein the temperature-induced change in resistance is dependent on heat exchange with the electrically conductive structure and an environment;
processing the received data for determining contact information between a sensor acquiring the data and the object or the fluid;
wherein the temperature-induced change in resistance is processed based on information of the thermal property of the object or fluid for determining said contact information;
wherein the processing determines contact information in relation to a total area of the electrically conductive structure and wherein the processing determines contact information as a percentage of the total area of the electrically conductive structure making contact with the object or the fluid.

15. A computer program product comprising computer-readable instructions such that when executed on a processing unit the computer program product will cause the processing unit to perform the method according to claim 14.

**Patentansprüche**

1. System (100) zur Bestimmung eines Kontakts mit einem Objekt (102) oder einem Fluid (108), wobei das System (100) umfasst:

   einen Sensor (110) der eine elektrisch leitfähige Struktur (112) umfasst, wobei der Sensor (110) dazu konfiguriert ist, einen Strom durch die elektrisch leitfähige Struktur (112) hindurch zu induzieren und eine temperaturinduzierte Veränderung des Widerstands der elektrisch leitfähigen Struktur (112) abzutasten, um Kontaktinformationen zu bestimmen, wobei die temperaturinduzierte Veränderung des Widerstands von einem Wärmeaustausch mit der elektrisch leitfähigen Struktur (112) und einer Umgebung abhängig ist;
   eine Prozessoreinheit (120), die dazu konfiguriert ist, die abgetastete temperaturinduzierte Veränderung des Widerstands zu empfangen, wobei die Prozessoreinheit (120) dazu konfiguriert ist, die abgetastete temperaturinduzierte Veränderung des Widerstands zur Bestimmung von Kontaktinformationen zwischen dem Sensor (110) und dem Objekt (102) oder dem Fluid (108) zu verarbeiten;
   wobei die Prozessoreinheit (120) Zugang zu Informationen über eine thermische Eigenschaft des Objekts (102) oder des Fluids (108) hat, und die Prozessoreinheit (120) dazu konfiguriert ist, die abgetastete temperaturinduzierte Veränderung des Widerstands basierend auf den Informationen über die thermische Eigenschaft des Objekts (102) oder des Fluids (108) zur Bestimmung der Kontaktinformationen zu verarbeiten;
   wobei die Prozessoreinheit (120) dazu konfiguriert ist, Kontaktinformationen bezüglich einer Gesamtfläche der elektrisch leitfähigen Struktur (112) zu bestimmen, und wobei die Prozessoreinheit (120) dazu konfiguriert ist, die Kontaktinformationen als einen Anteil der Gesamtfläche der elektrisch leitfähigen Struktur (112), der mit dem Objekt (102) oder dem Fluid (108) in Kontakt kommt, zu bestimmen.

2. System nach Anspruch 1, wobei die Prozessoreinheit (120) ferner Zugang zu Informationen über eine thermische Eigenschaft einer Substanz hat, die das Objekt (102) oder das Fluid (108) umgibt.

3. System nach einem der vorhergehenden Ansprüche, wobei der Sensor (110) ferner dazu konfiguriert ist, eine Messung der temperaturinduzierten Veränderung des Widerstands zur Bestimmung einer Temperatur des Objekts (102) oder des Fluids (108) zu erfassen, wobei die Prozessoreinheit (120) dazu konfiguriert ist, die Messung zu verarbeiten, um eine Temperatur des Objekts (102) oder des Fluids (108) zu bestimmen.

4. System nach Anspruch 3, wobei der Sensor (110) dazu konfiguriert ist, die Messung basierend darauf zu erfassen, dass der Strom, der durch die elektrisch leitfähige Struktur (112) hindurch induziert wird, unter einem selbstheizenden Strom liegt, so dass der Strom, der induziert wird, kleiner als eine Schwelle zum Bewirken des Erhitzens der elektrisch leitfähigen Struktur (112) ist.

5. System nach Anspruch 4, wobei die Prozessoreinheit (120) dazu konfiguriert ist, basierend auf den Kontaktinformationen zu überprüfen, ob die Messung mit einem geeigneten Kontakt mit dem Objekt (102) oder dem Fluid (108) erfasst wird, indem bestimmt wird, ob der Anteil der Gesamtfläche der elektrisch leitfähigen Struktur, der mit dem Objekt in Kontakt kommt, eine Schwelle überschreitet.

6. System nach Anspruch 5, wobei der Sensor (110) dazu konfiguriert ist, die temperaturinduzierte Veränderung des Widerstands der elektrisch leitfähigen Struktur (112) zur Bestimmung von Kontaktinformationen basierend darauf abzutasten, dass der Strom, der durch die elektrisch leitfähige Struktur (112) induziert wird, über dem selbstheizenden Strom liegt, so dass der Strom, der induziert wird, größer als die Schwelle ist.

7. System nach einem der Ansprüche 3 bis 6, wobei die Prozessoreinheit (120) dazu konfiguriert ist, die Temperatur des Objekts (102) oder des Fluids (108) zu bestimmen, wobei ein Kontaktgrad mit dem Objekt (102) oder dem Fluid (108) berücksichtigt wird.

8. System nach einem der vorhergehenden Ansprüche, wobei der Sensor (110) dazu konfiguriert ist, die temperaturinduzierte Veränderung des Widerstands der elektrisch leitfähigen Struktur (112) zur Bestimmung von Kontaktinformationen basierend auf einem Stromimpuls, der auf die elektrisch leitfähige Struktur (112) angewendet wird, abzutasten, wobei der Stromimpuls kurz genug ist, um ein Sondieren über eine Grenze des Objekts (102) oder des Fluids (108) hinaus in einer Richtung, die zu einer Fläche der elektrisch leitfähigen Struktur (112) rechtwinklig ist, zu verhindern.

9. System nach Anspruch 8, wobei die Prozessoreinheit (120) dazu konfiguriert ist, ein Kennzeichen der abgetasteten temperaturinduzierten Veränderung des Widerstands, während der Stromimpuls angelegt wird, mit einem erwarteten Kennzeichen basierend auf Informationen über eine thermische Eigenschaft des Objekts (102) oder des Fluids (108) zu vergleichen.

10. System nach einem der vorhergehenden Ansprüche, ferner umfassend eine Anordnung von Sensoren (110a bis f), wobei die Prozessoreinheit (120) dazu konfiguriert ist, Kontaktinformationen über die Anordnung von Sensoren (110a bis f) basierend auf dem Empfangen von abgetasteten temperaturinduzierten Veränderungen des Widerstands von der Anordnung von Sensoren (110a bis f) zu verarbeiten.

11. System nach einem der vorhergehenden Ansprüche, wobei die Prozessoreinheit (120) dazu konfiguriert ist, die abgetastete temperaturinduzierte Veränderung des Widerstands zur Bestimmung einer Entfernung zu dem Objekt (102) oder dem Fluid (108) zu verarbeiten.

12. System nach einem der vorhergehenden Ansprüche, wobei die Prozessoreinheit (120) dazu konfiguriert ist, die abgetastete temperaturinduzierte Veränderung des Widerstands zum Quantifizieren der Rauheit einer Oberfläche des Objekts (102) zu verarbeiten.

13. Verfahren zur Bestimmung eines Kontakts mit einem Objekt oder einem Fluid, wobei das Verfahren umfasst:

Induzieren (202) eines Stroms durch eine elektrisch leitfähige Struktur eines Sensors hindurch;
Abtasten (204) einer temperaturinduzierten Veränderung des Widerstands der elektrisch leitfähigen Struktur, wobei die temperaturinduzierte Veränderung des Widerstands von einem Wärmeaustausch mit der elektrisch leitfähigen Struktur und einer Umgebung abhängig ist;
Verarbeiten (208) der abgetasteten temperaturinduzierten Veränderung des Widerstands zur Bestimmung von Kontaktinformationen zwischen dem Sensor und dem Objekt oder dem Fluid;
wobei die abgetastete temperaturinduzierte Veränderung des Widerstands basierend auf Informationen über die thermische Eigenschaft des Objekts oder des Fluids zur Bestimmung der Kontaktinformationen verarbeitet wird;
wobei die Verarbeitung Kontaktinformationen bezüglich einer Gesamtfläche der elektrisch leitfähigen Struktur bestimmt, und wobei die Verarbeitung Kontaktinformationen als einen Anteil der Gesamtfläche der elektrisch leitfähigen Struktur, die mit dem Objekt oder dem Fluid in Kontakt kommt, bestimmt.

14. Computerumgesetztes Verfahren zur Bestimmung eines Kontakts mit einem Objekt oder einem Fluid, wobei das Verfahren umfasst:

Empfangen von Daten, die eine temperaturinduzierte Veränderung des Widerstands einer elektrisch leitfähigen Struktur angeben, wobei die temperaturinduzierte Veränderung des Widerstands von einem Wärmeaustausch mit der elektrisch leitfähigen Struktur und einer Umgebung abhängig ist;
Verarbeiten der empfangenen Daten zur Bestimmung von Kontaktinformationen zwischen einem Sensor, der die Daten erfasst, und dem Objekt oder dem Fluid;
wobei die temperaturinduzierte Veränderung des Widerstands basierend auf Informationen über die thermische Eigenschaft des Objekts oder des Fluids zur Bestimmung der Kontaktinformationen verarbeitet wird;
wobei die Verarbeitung Kontaktinformationen bezüglich einer Gesamtfläche der elektrisch leitfähigen Struktur bestimmt, und wobei die Verarbeitung Kontaktinformationen als einen Anteil der Gesamtfläche der elektrisch leitfähigen Struktur, die mit dem Objekt oder dem Fluid in Kontakt kommt, bestimmt.

15. Computerprogrammprodukt, das computerlesbare Anweisungen umfasst, so dass, wenn es auf einer Verarbeitungseinheit ausgeführt wird, das Computerprogrammprodukt bewirkt, dass die Verarbeitungseinheit das Verfahren nach Anspruch 14 ausführt.

**Revendications**

1. Système (100) de détermination du contact avec un objet (102) ou un fluide (108), ledit système (100) comprenant :

un capteur (110) comprenant une structure électriquement conductrice (112), dans lequel le capteur (110) est configuré pour induire un courant à travers la structure électriquement conductrice (112) et détecter une variation de résistance induite par la température la structure électriquement conductrice (112) afin de déterminer l'information de contact, dans lequel la variation de résistance induite par la température dépend des échanges thermiques avec la structure électriquement conductrice (112) et un environnement ;
une unité de traitement (120) configurée pour recevoir la variation de résistance induite par la température, dans lequel l'unité de traitement (120) est configurée pour traiter la variation de résistance induite par la température détectée afin de déterminer l'information de contact entre le capteur (110) et l'objet (102) ou le fluide (108) ; dans lequel l'unité de traitement (120) a accès aux informations relatives à une propriété thermique de l'objet (102) ou du fluide (108) et l'unité de traitement (120) est configurée pour traiter la variation de résistance induite par la température détectée, sur la base des informations relatives à la propriété thermique de l'objet (102) ou du fluide (108), afin de déterminer lesdites informations de contact ;
dans lequel l'unité de traitement (120) est configurée pour déterminer les informations de contact par rapport à une surface totale de la structure électriquement conductrice (112) et, dans lequel l'unité de traitement (120) est configurée pour déterminer les informations de contact comme un pourcentage de la surface totale de la structure électriquement conductrice (112) en contact avec l'objet (102) ou le fluide (108).

2. Système selon la revendication 1, dans lequel l'unité de traitement (120) a également accès aux informations relatives à une propriété thermique d'une matière entourant l'objet (102) ou le fluide (108).

3. Système selon une quelconque des revendications précédentes, dans lequel le capteur (110) est en outre configuré pour acquérir une mesure de la variation de résistance induite par la température afin de déterminer une température de l'objet (102) ou du fluide (108), dans lequel l'unité de traitement (120) est configurée pour traiter la mesure afin de déterminer la température de l'objet (102) ou du fluide (108).

4. Système selon la revendication 3, dans lequel le capteur (110) est configuré pour acquérir la mesure sur la base du courant étant induit à travers la structure électriquement conductrice (112) étant inférieur à un courant d'auto-échauffement de sorte que le courant induit soit inférieur à un seuil déclenchant le chauffage de la structure électriquement conductrice (112).

5. Système selon la revendication 4, dans lequel l'unité de traitement (120) est configurée pour vérifier, sur la base des informations de contact, si la mesure est acquise avec un contact approprié avec l'objet (102) ou le fluide (108), en déterminant si le pourcentage de la surface totale de la structure électriquement conductrice en contact avec l'objet dépasse un seuil.

6. Système selon la revendication 5, dans lequel le capteur (110) est configuré pour détecter la variation de résistance induite par la température de la structure électriquement conductrice (112) afin de déterminer les informations de contact, sur la base du courant étant induit dans la structure électriquement conductrice (112) qui est supérieur au courant d'auto-échauffement, de sorte que le courant induit soit supérieur au seuil.

7. Système selon une quelconque des revendications 3 à 6, dans lequel l'unité de traitement (120) est configurée pour déterminer la température de l'objet (102) ou du fluide (108) en tenant compte du degré de contact avec l'objet (102) ou le fluide (108).

8. Système selon une quelconque des revendications précédentes, dans lequel le capteur (110) est configuré pour détecter la variation de résistance induite par la température de la structure électriquement conductrice (112) afin de déterminer les informations de contact sur la base d'une impulsion de courant étant appliquée à la structure électriquement conductrice (112), dans lequel l'impulsion de courant est suffisamment courte pour éviter toute détection au-delà des limites de l'objet (102) ou du fluide (108) dans une direction perpendiculaire à une zone de la structure conductrice (112).

9. Système selon la revendication 8, dans lequel l'unité de traitement (120) est configurée pour comparer une caractéristique de la variation de résistance induite par la température détectée pendant l'application d'une impulsion de courant à une caractéristique attendue sur la base des informations relatives à une propriété thermique de l'objet (102) ou du fluide (108).

10. Système selon une quelconque des revendications précédentes, comprenant en outre un réseau de capteurs (110a-f), dans lequel l'unité de traitement (120) est configurée pour déterminer les informations de contact à travers le réseau de capteurs (110a-f) sur la base de la réception des variations de résistance induites par la température détectées par le réseau de capteurs (110a-f).

11. Système selon une quelconque des revendications précédentes, dans lequel l'unité de traitement (120) est configurée pour traiter la variation de résistance induite par la température détectée afin de déterminer une distance par rapport à l'objet (102) ou au fluide (108).

12. Système selon une quelconque des revendications précédentes, dans lequel l'unité de traitement (120) est configurée pour traiter la variation de résistance induite par la température afin de quantifier la rugosité d'une surface de l'objet (102).

13. Procédé de détermination du contact avec un objet ou un fluide, comprenant :

l'induction (202) d'un courant à travers une structure électriquement conductrice d'un capteur ;
la détection (204) d'une variation de résistance induite par la température dans la structure conductrice, dans lequel la variation de résistance induite par la température dépend des échanges thermiques avec la structure conductrice et un environnement ;
le traitement (208) de la variation de résistance induite par la température afin de déterminer les informations de contact entre le capteur et l'objet ou le fluide,
dans lequel la variation de résistance induite par la température est traitée sur la base des propriétés thermiques de l'objet ou du fluide afin de déterminer lesdites informations de contact ;
dans lequel le traitement détermine les informations de contact par rapport à la surface totale de la structure électriquement conductrice et dans lequel le traitement détermine les informations de contact comme un pourcentage de la surface totale de la structure électriquement conductrice en contact avec l'objet ou le fluide.

14. Procédé informatisé de détermination du contact avec un objet ou un fluide, ledit procédé comprenant :

la réception de données indiquant une variation de résistance induite par la température d'une structure électriquement conductrice, dans lequel la variation de résistance induite par la température dépendant des échanges thermiques avec la structure électriquement conductrice et un environnement ;
le traitement des données reçues pour déterminer une information de contact entre un capteur acquérant les données et l'objet ou le fluide ;
dans lequel la variation de résistance induite par la température est traitée sur la base des informations relatives aux propriétés thermiques de l'objet ou du fluide afin de déterminer lesdites informations de contact ;
dans lequel le traitement détermine les informations de contact par rapport à une surface totale de la structure électriquement conductrice (112) et, dans lequel le traitement détermine les informations de contact comme un pourcentage de la surface totale de la structure électriquement conductrice (112) en contact avec l'objet (102) ou le fluide (108).

15. Produit de programme informatique comprenant des instructions lisibles par ordinateur, de sorte que, lorsqu'il est exécuté sur une unité de traitement, le produit de programme informatique amène l'unité de traitement à mettre en œuvre le procédé selon la revendication 14.

Fig. 1

Low e

Fig. 2a

High e

Fig. 2b

Fig. 2c

50% coverage

Fig. 3a

75% coverage

Fig. 3b

Fig. 3c

*Fig. 4*

*Fig. 5*

*Fig. 6*

100

102

110    112

120

*Fig. 7*

102

100

112

110

120

*Fig. 8*

Apply current to electrically
conductive structure of sensor

— 202

Sense temperature-induced
change in resistance of electrically
conductive structure

— 204

Access information of thermal
property of object or fluid

— 206

Process sensed
temperature-induced change
in resistance based on information
of thermal property for determining
contact information between
sensor and object or fluid

— 208

*Fig. 9*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- TRANSIENT PLANE SOURCE TECHNIQUES FOR THERMAL CONDUCTIVITY AND THERMAL DIFFUSIVITY MEASUREMENTS OF SOLID MATERIALS. **GUSTAFSSON S E**. REVIEW OF SCIENTIFIC INSTRUMENTS. AMERICAN INSTITUTE OF PHYSICS, 01 March 1991, vol. 62, 797-804